(19) Europäisches Patentamt
European Patent Office
Office européen des brevets

(11) **EP 2 434 633 A1**

(12) **EUROPEAN PATENT APPLICATION**

(43) Date of publication:
**28.03.2012 Bulletin 2012/13**

(51) Int Cl.:
**H02N 11/00** (2006.01)

(21) Application number: **11181853.0**

(22) Date of filing: **19.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.09.2010 TW 099132205**

(71) Applicant: **Lai, Ping-Li**
**Woo-Jih Taichung City**
**T'ai pei (TW)**

(72) Inventor: **Lai, Ping-Li**
**Woo-Jih Taichung City**
**T'ai pei (TW)**

(74) Representative: **ip21 Ltd**
**Central Formalities Department**
**Lakeside 300**
**Old Chapel Way**
**Broadland Business Park**
**Norwich**
**Norfolk NR7 0WG (GB)**

(54) **Quantum reaction method and device thereof**

(57)     A quantum reaction method and a device thereof. The quantum reaction method includes steps of: providing a first reaction space and a second reaction space. Building at least one magnetic force tunnel set between the first and second reaction spaces. Building at least one agitation magnetic field set in at least one of the first and second reaction spaces. Filling into the first and second reaction spaces a reaction fluid approximately at the pressure and temperature of liquid-gas interface (boiling point curve); and turning on the agitation magnetic field set to agitate the reaction fluid, whereby the magnetic force tunnel set guides the reaction fluid to back and forth flow between the first and second reaction spaces to alternately react.

FIG. 2

**Description**

BACKGROUND OF THE INVENTION

FIELD OF THE INVENTION

The present invention relates generally to a quantum reaction method and a device thereof. In the quantum reaction method, magnetic fields are used to control a reaction fluid approximately at the pressure and temperature of liquid-gas interface (boiling point curve), whereby the reaction fluid continuously back and forth flows between two reaction spaces to alternately react. During the reaction process, the reaction of the reaction fluid is converted into energy.

DESCRIPTION OF THE PRIOR ART

It is known that petroleum energy has been more and more exhausted. This leads to rapid rise of price of raw oil. It is always an extremely urgent issue to develop new energy sources such as solar energy, nuclear energy, wind power energy, tide energy, terrestrial heat energy, ocean thermal energy conversion and even the biomass energy that has been more and more respected in recent years. However, there are many obstacles to the developments of these energy sources so that these energy sources can never substitute for the petroleum energy and nuclear energy. For example, with respect to solar energy, the energy conversion efficiency is poor. With respect to wind power energy, tide energy, terrestrial heat energy and ocean thermal energy conversion, the site is limited. With respect to biomass energy, the originally quite limited land resource is plundered. With respect to nuclear energy, the safety of nuclear energy and nuclear waste is always criticized by people. Also, with respect to solar energy, wind power energy, tide energy, terrestrial heat energy, ocean thermal energy conversion and biomass energy, the supply is insufficient. Therefore, the developments of these alternative energy sources are not optimistic due to the above factors.

Besides, it is well known that the use of petroleum energy has long since caused pollution of air, water sources and environments, seriously ruined the ecological environments of the earth and even seriously threatened the lives of various creatures. For example, excessive carbon dioxide is produced to lead to serious greenhouse effect. According to Kyoto Protocol and Copenhagen Accord, the necessity of energy saving and carbon reduction has been identified by all countries of the world.

SUMMARY OF THE INVENTION

It is therefore a primary object of the present invention to provide a quantum reaction method and a quantum reaction device thereof to provide a new energy source for people to choose.

To achieve the above and other objects, the quantum reaction method of the present invention includes steps of:

> providing a first reaction space and a second reaction space;
> defining a first track between the first and second reaction spaces and defining a second track in at least one of the first and second reaction space corresponding to the first track;
> building at least one magnetic force tunnel set between the first and second reaction spaces, each magnetic force tunnel set including first magnetic force tunnels and second magnetic force tunnels, the first and second magnetic force tunnels being alternately arranged along the first track at equal intervals, each of the first and second magnetic force tunnels including guide magnetic field and check magnetic field, the guide magnetic field of the first magnetic force tunnel and the check magnetic field of the second magnetic force tunnel being connected to one of the first and second reaction spaces, the check magnetic field of the first magnetic force tunnel and the conduction magnetic field of the second magnetic force tunnel being connected to the other of the first and second reaction spaces;
> building at least one agitation magnetic field set in at least one of the first and second reaction spaces, each agitation magnetic field set including first agitation magnetic field and second agitation magnetic field, the direction of the first agitation magnetic field being reverse to the direction of the agitation magnetic field, the first and second agitation magnetic fields being alternately arranged along the second track at equal intervals;
> filling into the first and second reaction spaces a reaction fluid approximately at the pressure and temperature of liquid-gas interface (boiling point curve), (the meaning of the term "approximately at" being a combination of "exactly at" and "approximately at"); and
> turning on the first and second agitation magnetic fields of the agitation magnetic field set to respectively agitate the reaction fluid along the second track, the guide magnetic fields of the first and second magnetic force tunnels guiding the reaction fluid to pass through the guide magnetic fields and then pass through the check magnetic fields of the first and second magnetic force tunnels, the checking magnetic fields providing checking effect for the reaction fluid to make the reaction fluid flow from one of the first and second reaction spaces into the other of the first and second reaction spaces, whereby the reaction fluid alternately flows between the first and second reaction spaces to react.

In the above quantum reaction method, the reaction fluid contains, but not limited to, carbon element, for example, carbon dioxide and carbon isotope.

In the above quantum reaction method, the direction of the guide magnetic field is reverse to the direction of the check magnetic field.

In the above quantum reaction method, the guide magnetic field includes an even number of magnetic poles with different polarities. The magnetic poles are arranged around one end of the first magnetic force tunnel and one end of the second magnetic force tunnel for guiding the reaction fluid to flow therebetween.

In the above quantum reaction method, at least one movable member is further disposed in one of the first and second reaction spaces. The movable member is movable along the second track relative to one of the reaction spaces. The agitation magnetic field set is built on the movable member for agitating the reaction fluid.

In the above quantum reaction method, the first and second agitation magnetic fields of each agitation magnetic field set respectively have first and second magnetic poles with different polarities.

In the above quantum reaction method, the first and second magnetic poles have unequal intensity of magnetic field.

In the above quantum reaction method, the movable member further has movement passage sets. Each movement passage set includes a first movement passage and a second movement passage. The first agitation magnetic field is annularly disposed on inner edge of the first movement passage. The second agitation magnetic field is annularly disposed on inner edge of the second movement passage. The first and second movement passages are arranged along the second track.

In the above quantum reaction method, the reaction of the reaction fluid is converted into mechanical energy.

In the above quantum reaction method, the mechanical energy is further converted into electric energy by means of electromagnetic induction.

In the above quantum reaction method, the reaction fluid reacts to do work on the movable member so as to convert the reaction of the reaction fluid into mechanical energy.

In the above quantum reaction method, in the beginning of the reaction, electromagnetic energy is applied to the movable member so as to make the movable member start moving from a stationary state.

In the above quantum reaction method, the first and second reaction spaces further have a central line. The first and second stationary passages of the stationary passage set are alternately distributed at equal angular intervals along a first circular track centered at the central line.

In the above quantum reaction method, the movable member is rotatable around the central line.

In the above quantum reaction method, the first and second agitation magnetic fields of the agitation magnetic field set are alternately distributed at equal angular intervals along a second circular track centered at the central line and revolve along the second circular track. The second circular track of the agitation magnetic field set corresponds to the first circular track of the stationary passage set, whereby during the revolution, the agitation magnetic field set always sequentially passes through the stationary passage set.

In the above quantum reaction method, there are totally ten first and second magnetic force tunnels.

In the above quantum reaction method, there are totally twelve first and second agitation magnetic fields.

The quantum reaction device of the present invention includes:

a reaction container at least having a first reaction space and a second reaction space in communication with the first reaction space, a first track being defined between the first and second reaction spaces, a second track being defined in at least one of the first and second reaction space corresponding to the first track, a reaction fluid approximately at the pressure and temperature of liquid-gas interface (boiling point curve) being filled in the first and second reaction spaces;

at least one stationary passage set disposed between the first and second reaction spaces, each stationary passage set including first stationary passages and second stationary passages, the first and second stationary passages being alternately arranged at equal intervals along the first track;

at least one magnetic force tunnel set disposed at each stationary passage set, each magnetic force tunnel set including first magnetic force tunnels and second magnetic force tunnels, the first magnetic force tunnels being disposed at the first stationary passages, while the second magnetic force tunnels being disposed at the second stationary passages, each of the first and second magnetic force tunnels including guide magnetic field and check magnetic field, the guide magnetic field of the first magnetic force tunnel and the check magnetic field of the second magnetic force tunnel being connected to one of the first and second reaction spaces, the check magnetic field of the first magnetic force tunnel and the conduction magnetic field of the second magnetic force tunnel being connected to the other of the first and second reaction spaces; and

at least one movable agitation magnetic field set, each agitation magnetic field set including first agitation magnetic field and second agitation magnetic field, the direction of the first agitation magnetic field being reverse to the direction of the agitation magnetic field, the first and second agitation magnetic fields being alternately arranged at equal intervals along the second track to agitate the reaction fluid, when the reaction fluid sequentially passes through the first and second stationary passages, the guide magnetic fields of the passages providing guiding effect for the reaction fluid and the check magnetic fields of the passages providing checking effect for the reaction fluid, whereby the reaction fluid alternately flows between the first and second reaction spaces to react.

In the above quantum reaction device, the reaction fluid contains, but not limited to, carbon element, for example, carbon dioxide and carbon isotope.

In the above quantum reaction device, the direction of the guide magnetic field is reverse to the direction of the check magnetic field.

In the above quantum reaction device, the first stationary passage of each stationary passage set has a first inlet end and a first outlet end and the second stationary passage of each stationary passage set has a second inlet end and a second outlet end. The first inlet end of the first stationary passage and the second outlet end of the second stationary passage are connected to one of the first and second reaction spaces. The first outlet end of the first stationary passage and the second inlet end of the second stationary passage are connected to the other of the first and second reaction spaces.

In the above quantum reaction device, each guide magnetic field surrounds the first inlet end of the first stationary passage and the second outlet end of the second stationary passage and is connected to one of the first and second reaction spaces. Each check magnetic field surrounds the first outlet end of the first stationary passage and the second inlet end of the second stationary passage and is connected to the other of the first and second reaction spaces.

In the above quantum reaction device, the guide magnetic field includes an even number of magnetic poles with different polarities. The magnetic poles are arranged around the first inlet end of the first stationary passage and the second inlet end of the second stationary passage for guiding the reaction fluid to flow therebetween.

The above quantum reaction device further includes a movable member. The movable member is movable relative to one of the reaction spaces.

In the above quantum reaction device, the agitation magnetic field set is built on the movable member for agitating the reaction fluid.

In the above quantum reaction device, the first and second agitation magnetic fields of each agitation magnetic field set respectively have first and second magnetic poles with different polarities.

In the above quantum reaction device, the first and second magnetic poles have unequal intensity of magnetic field.

In the above quantum reaction device, the movable member further has movement passage sets. Each movement passage set includes a first movement passage and a second movement passage. The first agitation magnetic field is annularly disposed on inner edge of the first movement passage. The second agitation magnetic field is annularly disposed on inner edge of the second movement passage.

In the above quantum reaction device, the movable member is rotatable around a central line.

In the above quantum reaction device, the first and second stationary passages of the stationary passage set are alternately distributed at equal angular intervals along a first circular track centered at the central line.

In the above quantum reaction device, the agitation magnetic field set is distributed at equal angular intervals along a second circular track centered at the central line and revolves along the second circular track. The second circular track of the agitation magnetic field set corresponds to the first circular track, whereby during the revolution, the agitation magnetic field set always sequentially corresponds to the stationary passage set.

In the above quantum reaction device, there are totally ten first and second magnetic force tunnels.

In the above quantum reaction device, there are totally twelve first and second agitation magnetic fields.

The quantum reaction device further includes a rotation control device. The rotation control device includes:

a first magnetic field set including multiple first magnetic field units arranged along the rotational track of the movable member at equal angular intervals;

a second magnetic field set including multiple second magnetic field units disposed in the reaction container and arranged at equal angular intervals corresponding to the rotational track of the movable member for magnetizing the first magnetic field set to make the movable member rotate around the central line; and

a power supply circuit serving to supply power to the second magnetic field set for the second magnetic field set to create magnetic field for magnetizing the first magnetic field set so as to make the movable member rotate around the central line.

The quantum reaction device further includes an energy conversion device. The energy conversion device includes:

a third magnetic field set including multiple third magnetic field units disposed in the reaction container and arranged at equal angular intervals corresponding to the rotational track of the movable member; and

a fourth magnetic field set including multiple fourth magnetic field units arranged on the movable member at equal angular intervals corresponding to the rotational track of the movable member, the fourth magnetic field set serving to magnetize the third magnetic field set for the third magnetic field set to generate induced current.

In the above quantum reaction device, the energy conversion device further includes a magnetic conduction member synchronously rotatable with the movable member and a fifth magnetic field set including multiple fifth magnetic field units. The fifth magnetic field units are arranged on the magnetic conduction member at equal angular intervals corresponding to the rotational track of the movable member and synchronously rotatable with the fourth magnetic field set, whereby the fourth and fifth magnetic field sets together magnetize the third magnetic field set for the third magnetic field set to generate induced current.

Still according to the above and other objects, the quantum reaction method of the present invention includes steps of: providing at least one first reaction space and at least one second reaction space; building at least one magnetic force tunnel set between the first and second reaction spaces, the magnetic force tunnel set including first and second magnetic force tunnels; building at least one agitation magnetic field set in at least one of the first and second reaction spaces, the agitation magnetic field set including first and second agitation magnetic fields; filling into the first and second reaction spaces a reaction fluid approximately at the pressure and temperature of liquid-gas interface (boiling point curve); and turning on the agitation magnetic field set to agitate the reaction fluid, whereby the magnetic force tunnel set guides the reaction fluid to back and forth flow between the first and second reaction spaces to alternately react.

In the quantum reaction method of the present invention, the agitation magnetic field set is used to agitate a reaction fluid approximately at the pressure and temperature of liquid-gas interface (boiling point curve), whereby the reaction fluid back and forth passes through the magnetic force tunnel set and continuously flows between at least two reaction spaces to alternately react. During the reaction process, the reaction of the reaction fluid is converted into mechanical energy by means of linear movement or rotation of the movable member. The mechanical energy can be further converted into electric energy and directly output for use without using any complicated steam turbine. The quantum reaction device of the present invention has simplified structure and smaller size. Therefore, the quantum reaction device of the present invention is widely applicable in various fields.

The present invention can be best understood through the following description and accompanying drawings, wherein:

BRIEF DESCRIPTION OF THE DRAWINGS

Fig. 1 is a flow chart of the present invention;
Fig. 2 is a sectional view of the present invention;
Fig. 3 is a plane view of the present invention;
Fig. 4 is a plane view of the present invention, showing the stationary passages thereof;
Fig. 5 is a top perspective exploded view of the quantum reaction device of the present invention;
Fig. 6 is a bottom perspective exploded view of the quantum reaction device of the present invention;
Fig. 7 is a perspective assembled view of the quantum reaction device of the present invention;
Fig. 8 is a longitudinal sectional view of the quantum reaction device of the present invention;
Fig. 9 is an enlarged view of circled area 9 of Fig. 8;
Fig. 10 is an enlarged view of circled area 10 of Fig. 8;
Fig. 11 is a sectional view taken along line 11-11 of Fig. 8;
and
Fig. 12 is a block diagram of the power supply circuit of the present invention.

DETAILED DESCRIPTION OF THE PREFERRED EMBODIMENTS

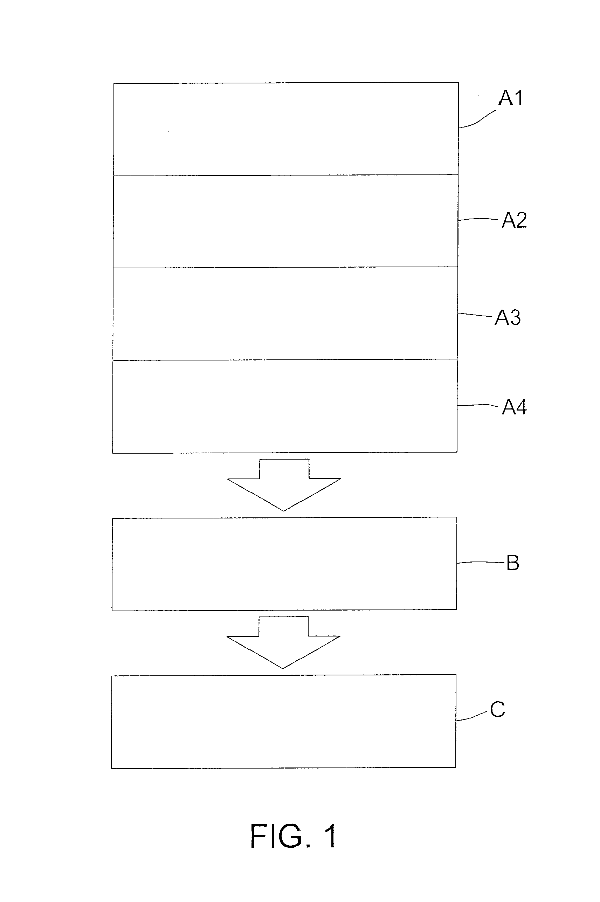

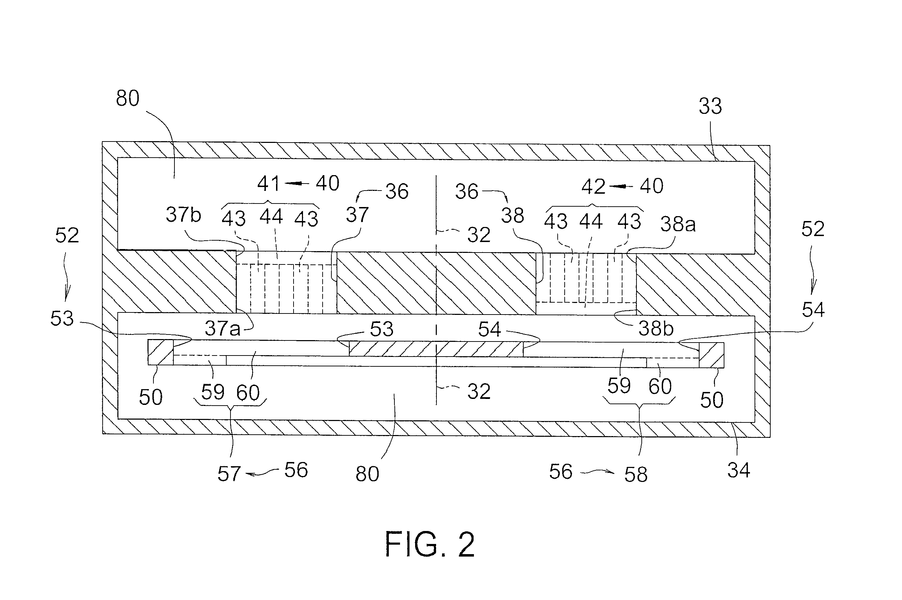

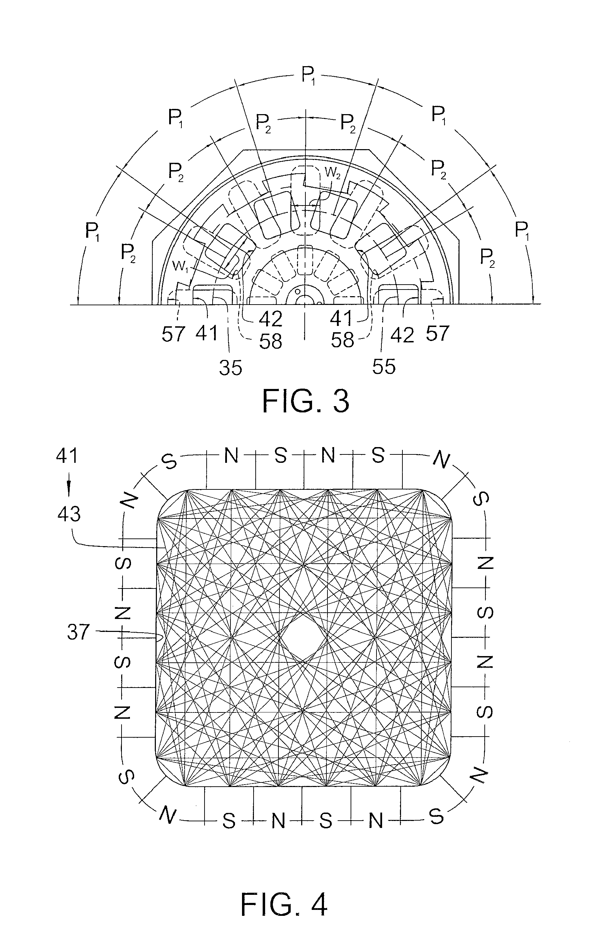

Please refer to Figs. 1 to 4. The quantum reaction method of the present invention includes:

step 1-1 (A1) of providing a first reaction space 33 and a second reaction space 34 (with reference to Fig. 1);
step 1-2 (A2) of defining a first track 35 between the first and second reaction spaces and defining a second track 55 in at least one of the first and second reaction space 33, 34 corresponding to the first track 35 (with reference to Fig. 1);
step 1-3 (A3) of building at least one magnetic force tunnel set 40 between the first and second reaction spaces 33, 34, each magnetic force tunnel set 40 including first magnetic force tunnels 41 and second magnetic force tunnels 42, the first and second magnetic force tunnels 41, 42 being alternately arranged along the first track 35 at equal intervals, each of the first and second magnetic force tunnels 41, 42 including guide magnetic field 43 and check magnetic field 44, the guide magnetic field 43 of the first magnetic force tunnel 41 and the check magnetic field 44 of the second magnetic force tunnel 42 being connected to one of the first and second reaction spaces 33, 34, the check magnetic field 44 of the first magnetic force tunnel 41 and the conduction magnetic field 43 of the second magnetic force tunnel 42 being connected to the other of the first and second reaction spaces 33, 34 (with reference to Fig. 1);

step 1-4 (A4) of building at least one agitation magnetic field set 56 in at least one of the first and second reaction spaces 33, 34, each agitation magnetic field set 56 including first agitation magnetic field 57 and second agitation magnetic field 58, the direction of the first agitation magnetic field 57 being reverse to the direction of the agitation magnetic field 58, the first and second agitation magnetic fields 57, 58 being alternately arranged along the second track 55 at equal intervals (with reference to Fig. 1);

step 2 (B) of filling into the first and second reaction spaces 33, 34 a reaction fluid 80 approximately at the pressure and temperature of liquid-gas interface (boiling point curve) (with reference to Fig. 1), (the meaning of the term "approximately at" being a combination of "exactly at" and "approximately at"); and

step 3 (C) of turning on the first and second agitation magnetic fields 57, 58 of the agitation magnetic field set 56 to respectively agitate the reaction fluid along the second track 55, the guide magnetic fields 43 of the first and second magnetic force tunnels 41, 42 guiding the reaction fluid 80 to pass through the guide magnetic fields 43 and then pass through the check magnetic fields 44 of the first and second magnetic force tunnels 41, 42, the checking magnetic fields 44 providing checking effect for the reaction fluid 80 to make the reaction fluid 80 flow from one of the first and second reaction spaces 33, 34 into the other of the first and second reaction spaces 33, 34, whereby the reaction fluid 80 alternately flows between the first and second reaction spaces to react (with reference to Fig. 1).

In a preferred embodiment, both the first and second magnetic force tunnels 41, 42 can communicate with the first and second agitation magnetic fields 57, 58 in the instant of reacting with the effective communication area always changed. This better state is preferably achieved in such a manner that a first pitch $P_1$ is formed from the central position of the first magnetic force tunnel 41 in the first track 35 to the central position of the second magnetic force tunnel 42 in the first track 35 along the first track 35. A first width $W_1$ is formed on each of the first and second magnetic force tunnels 41, 42 along the first track 35. A second pitch $P_2$ is formed from the central position of the first agitation magnetic field 57 in the second track 55 to the central position of the second agitation magnetic field 58 in the second track 55 along the second track 55. A second width $W_2$ is formed on each of the first and second agitation magnetic fields 57, 58 along the second track 55. $P_1 > 0$, $P_2 > 0$, $P1 \neq P_2$, $W_1 > 0$, $W_2 > 0$, $NP_1 = MP_2$. The relationship between the first pitch $P_1$, the first width $W_1$, the second pitch $P_2$ and the second width $W_2$ meets the following formulas:

$$1 < N < \frac{W_1 + W_2}{2 \mid (P_1 - P_2) \mid}$$

wherein:

N is the total number of the first and second agitation magnetic fields 57, 58, N being a positive integer; and

$$1 < M < \frac{W_1 + W_2}{2 \mid (P_1 - P_2) \mid} \times \frac{P_2}{P_1}$$

wherein:

M is the total number of the first and second magnetic force tunnels 41, 42.

It is not for certain that the first and second magnetic force tunnels 41, 42 always communicate with the first and second agitation magnetic fields 57, 58 in the instant of reacting. Other alternatives can be also adopted in the present invention without limitation.

In the above quantum reaction method, the direction of the guide magnetic field 43 is reverse to the direction of the check magnetic field 44.

The guide magnetic field 43 includes an even number of magnetic poles with different polarities. The magnetic poles are arranged around one end of the first magnetic force tunnel 41 and one end of the second magnetic force tunnel 42 for guiding the reaction fluid 80 to flow therebetween.

In the quantum reaction method, at least one movable member 50 is further disposed in one of the first and second reaction spaces 33, 34. The movable member 50 is movable along the second track 55 relative to one of the reaction spaces 33, 34. The agitation magnetic field set 56 is built on the movable member 50 for agitating the reaction fluid 80.

The first and second agitation magnetic fields 57, 58 of each agitation magnetic field set 56 respectively have first and second magnetic poles 59, 60 with different polarities. The first and second magnetic poles 59, 60 have unequal intensity of magnetic field.

The movable member 50 further has movement passage sets 52. Each movement passage set 52 includes a first movement passage 53 and a second movement passage 54. The first agitation magnetic field 57 is annularly disposed on inner edge of the first movement passage 53. The second agitation magnetic field 58 is annularly disposed on inner edge of the second movement passage 53. The first and second movement passages 53, 54 are arranged along the second track 55.

In the quantum reaction method of the present invention, the reaction of the reaction fluid 80 is converted into mechanical energy.

In the quantum reaction method of the present invention, the mechanical energy is further converted into electric energy by means of electromagnetic induction.

In the quantum reaction method of the present invention, the reaction fluid 80 reacts to do work on the movable member 50 so as to convert the reaction of the reaction fluid 80 into mechanical energy.

In the quantum reaction method of the present invention, in the beginning of the reaction, electromagnetic energy is applied to the movable member 50 so as to make the movable member 50 start moving from a stationary state.

The first and second reaction spaces 33, 34 further have a central line 32. The first and second stationary passages 37, 38 of the stationary passage set 36 are alternately distributed at equal angular intervals along a first circular track centered at the central line 32.

The movable member 50 is rotatable around the central line 32.

The first and second agitation magnetic fields 57, 58 of the agitation magnetic field set 56 are alternately distributed at equal angular intervals along a second circular track centered at the central line 32 and revolve along the second circular track. The second circular track of the agitation magnetic field set 56 corresponds to the first circular track of the stationary passage set 36, whereby during the revolution, the agitation magnetic field set 56 always sequentially passes through the stationary passage set 36.

The number of the guide magnetic fields 43 and the number of the check magnetic fields 44 are both 5. In other words, there are totally ten first and second magnetic force tunnels 41, 42 composed of the guide magnetic fields 43 and the check magnetic fields 44. The number of the agitation magnetic field sets 56 is 6. In other words, there are totally twelve first and second agitation magnetic fields 57, 58. Such arrangement makes the magnetic force tunnel set 40 composed of the first and second magnetic force tunnels 41, 42 and the agitation magnetic field set 56 composed of the first and second agitation magnetic fields 57, 58 have better reaction efficiency.

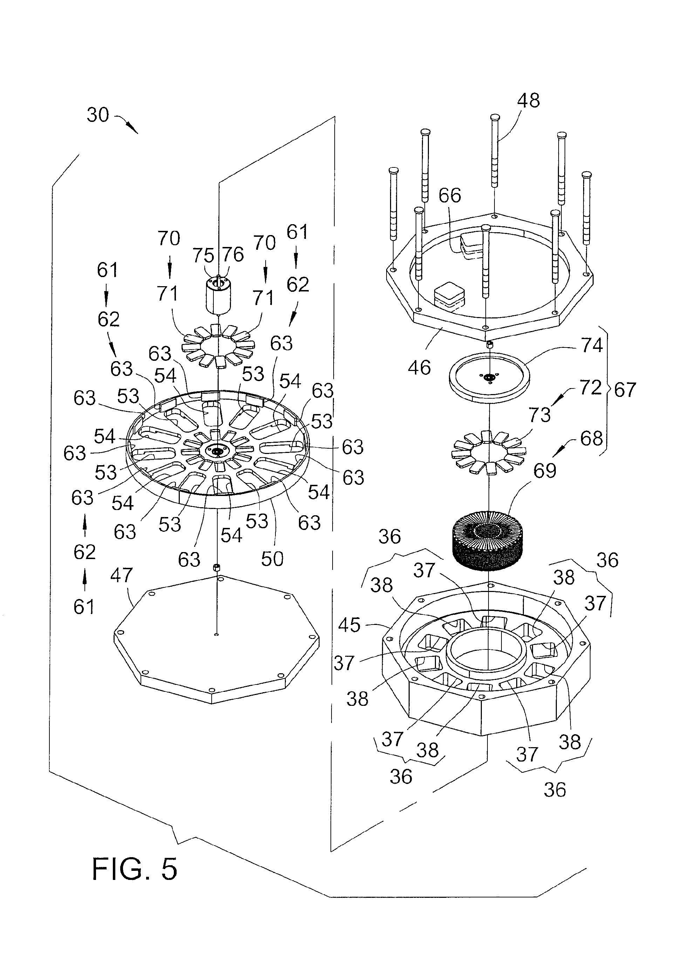

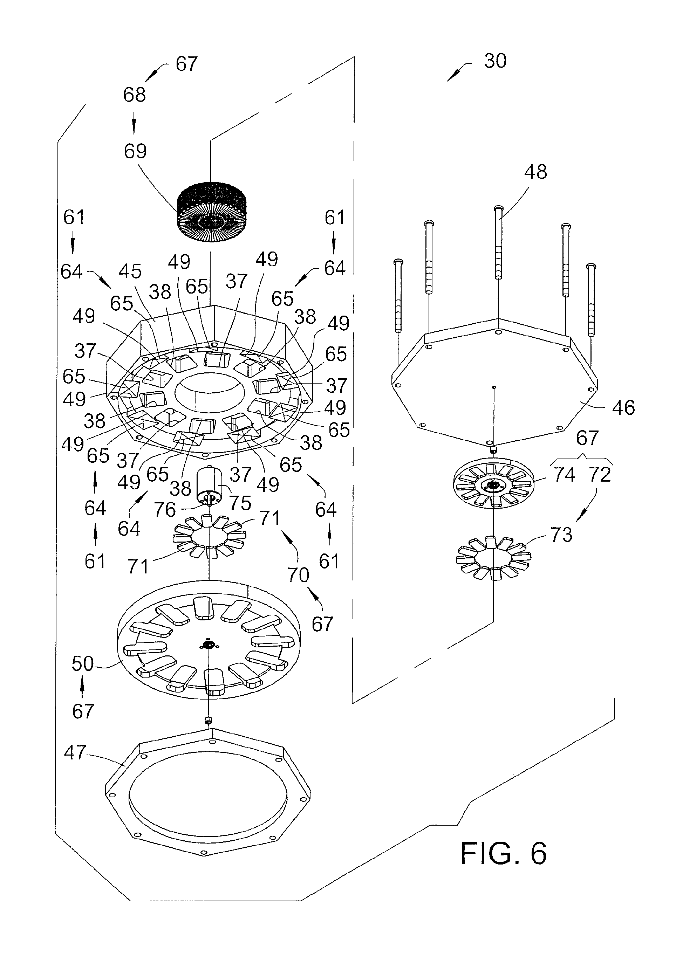

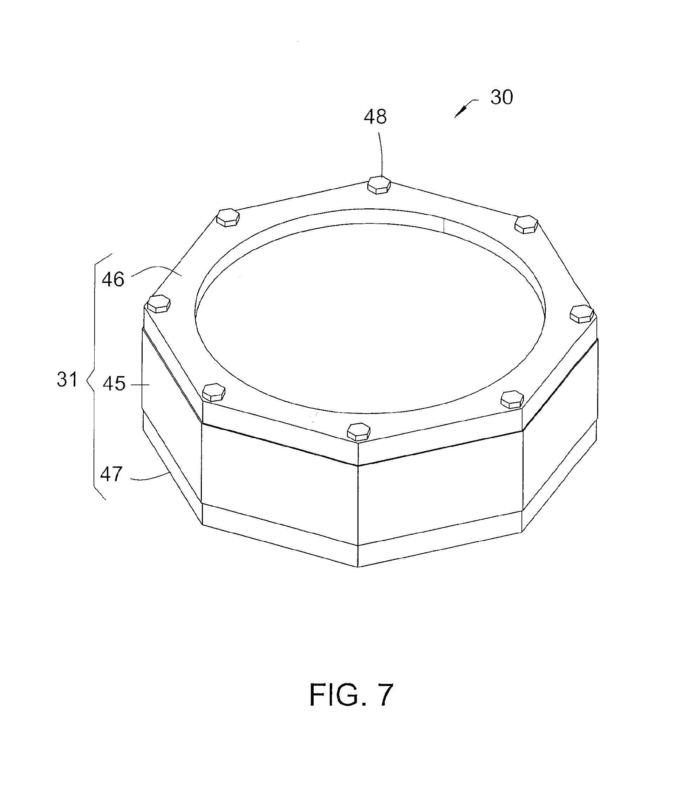

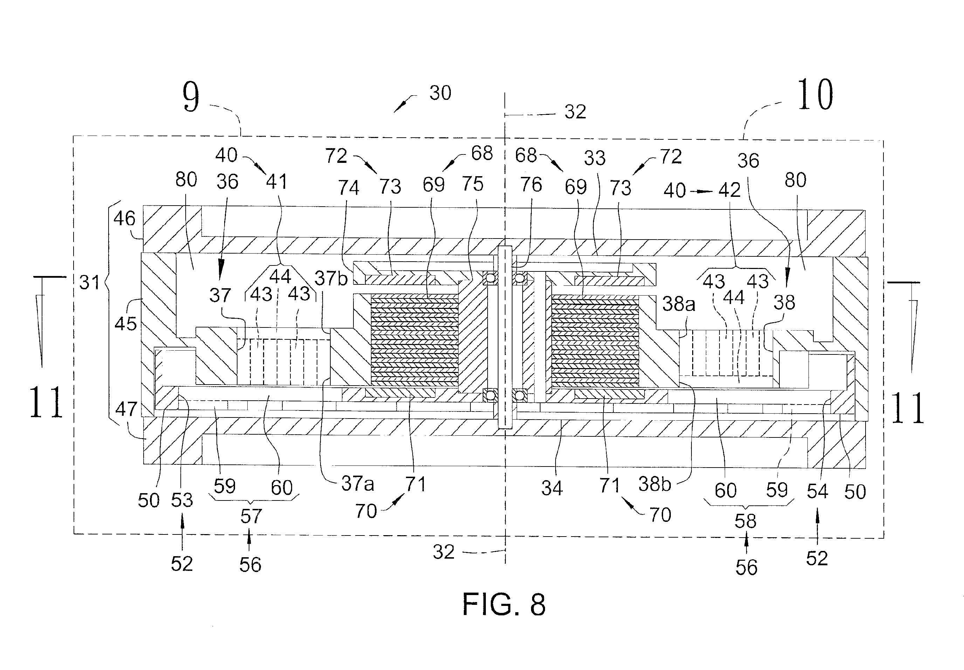

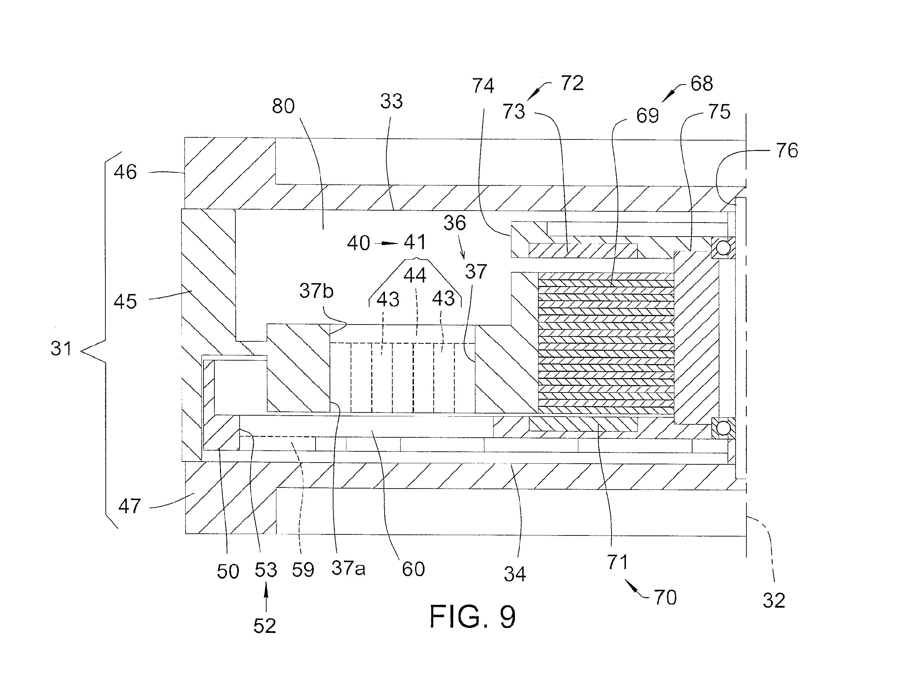

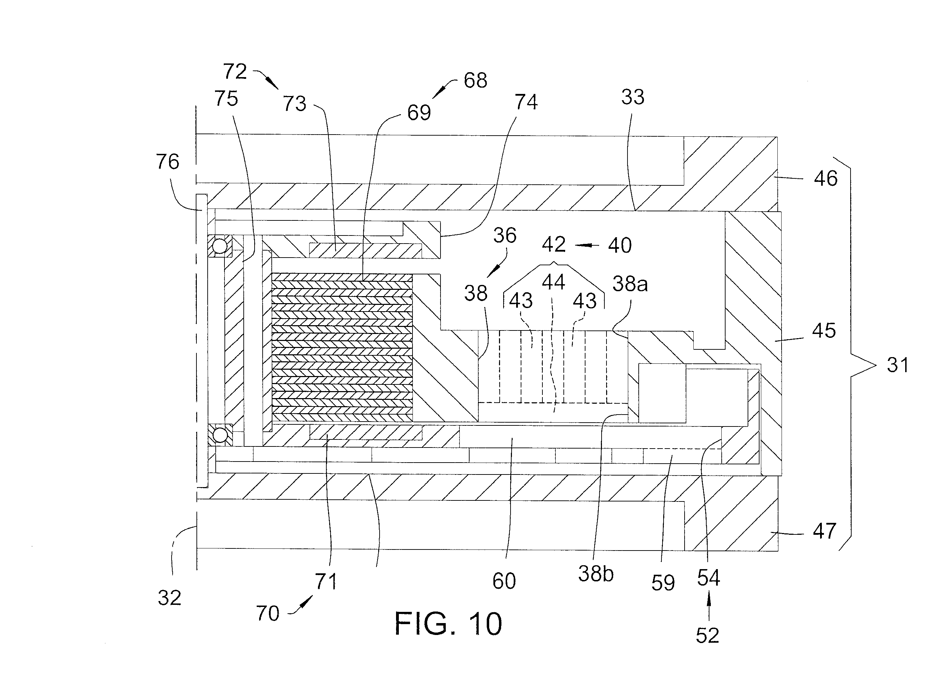

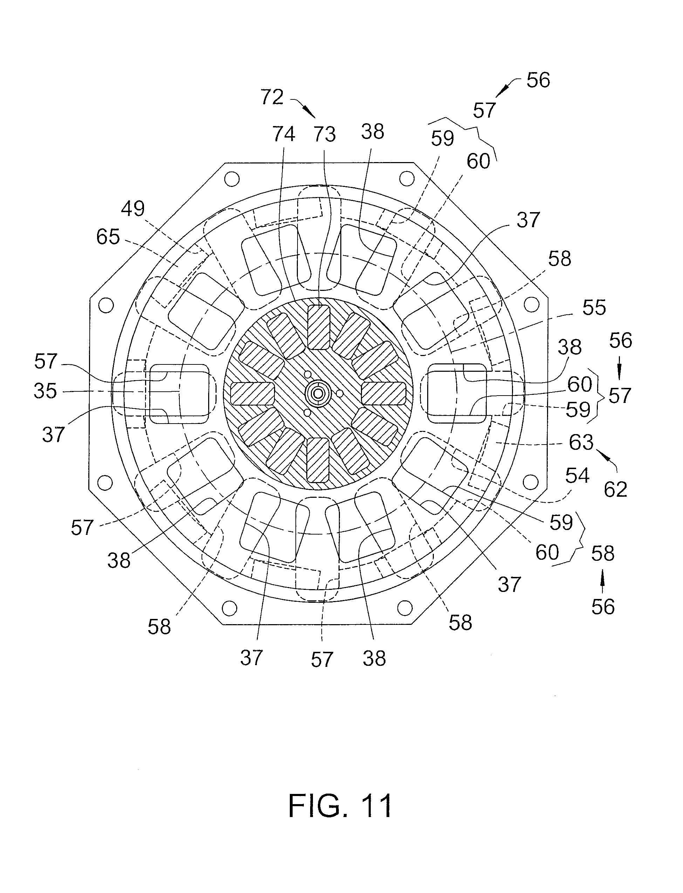

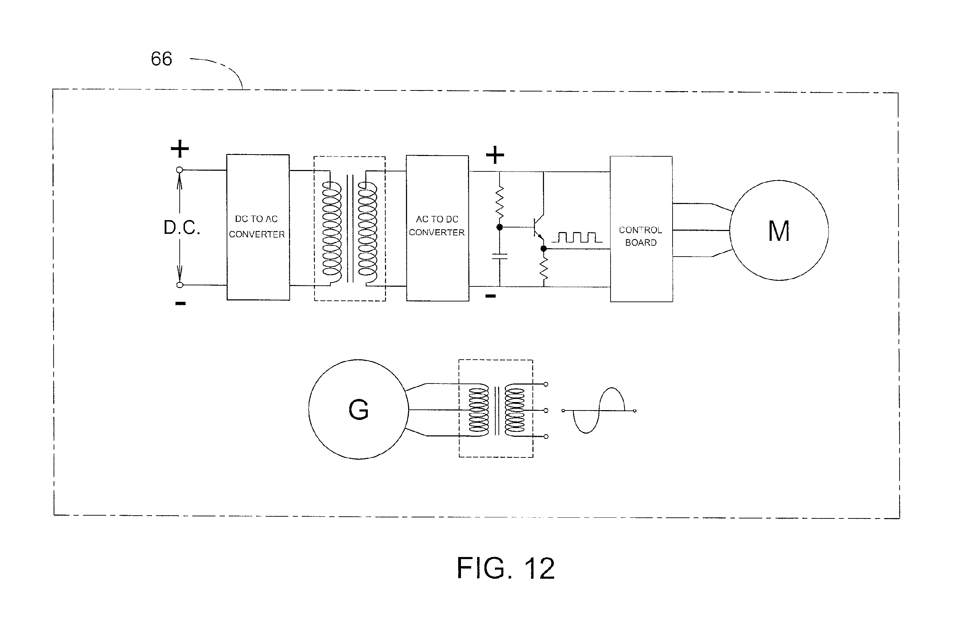

Please now refer to Figs. 5 to 12. The quantum reaction device 30 of the present invention includes a reaction container 31, at least one stationary passage set 36, at least one magnetic force tunnel set 40 and at least one movable agitation magnetic field set 56.

In this embodiment, the reaction container 31 is composed of a main housing 45 and two end caps 46, 47 respectively capped on two ends of the main housing 45 by means of multiple bolts 48.

The reaction container 31 at least has a first reaction space 33 and a second reaction space 34 in communication with the first reaction space 33. A first track 35 is defined between the first and second reaction spaces 33, 34. A second track 55 is defined in at least one of the first and second reaction space 33, 34 corresponding to the first track 35. A reaction fluid 80 approximately at the pressure and temperature of liquid-gas interface (boiling point curve) is filled in the first and second reaction spaces 33, 34.

The stationary passage set 36 is disposed between the first and second reaction spaces 33, 34. Each stationary passage set 36 includes first stationary passages 37 and second stationary passages 38. The first and second stationary passages 37, 38 are alternately arranged at equal intervals along the first track 35.

The magnetic force tunnel set 40 is disposed at each stationary passage set 36. Each magnetic force tunnel set 40 includes first magnetic force tunnels 41 and second magnetic force tunnels 42. The first magnetic force tunnels 41 are disposed at the first stationary passages 37, while the second magnetic force tunnels 42 are disposed at the second stationary passages 38. Each of the first and second magnetic force tunnels 41, 42 includes guide magnetic field 43 and check magnetic field 44. The guide magnetic field 43 of the first magnetic force tunnel 41 and the check magnetic field 44 of the second magnetic force tunnel 42 are connected to one of the first and second reaction spaces 33, 34. The check magnetic field 44 of the first magnetic force tunnel 41 and the conduction magnetic field 43 of the second magnetic force tunnel 42 are connected to the other of the first and second reaction spaces 33, 34.

Each agitation magnetic field set 56 includes first agitation magnetic field 57 and second agitation magnetic field 58. The direction of the first agitation magnetic field 57 is reverse to the direction of the agitation magnetic field 58. The first and second agitation magnetic fields 57, 58 are alternately arranged at equal intervals along the second track 55 to agitate the reaction fluid 80. Accordingly, when the reaction fluid 80 sequentially passes through the first and second stationary passages 37, 38, the guide magnetic fields 43 of the passages provide guiding effect for the reaction fluid 80 and the check magnetic fields 44 of the passages provide checking effect for the reaction fluid 80. Accordingly, the reaction fluid 80 alternately flows between the first and second reaction spaces 33, 34 to react.

In a preferred embodiment, both the first and second magnetic force tunnels 41, 42 can communicate with the first and second agitation magnetic fields 57, 58 in the instant of reacting with the effective communication area always changed. This better state is preferably achieved in such a manner that a first pitch $P_1$ is formed from the central position of the first magnetic force tunnel 41 in the first track 35 to the central position of the second magnetic force tunnel 42 in the first track 35 along the first track 35. A first width $W_1$ is formed on each of the first and second magnetic force tunnels 41, 42 along the first track 35. A second pitch $P_2$ is formed from the central position of the first agitation magnetic field 57 in the second track 55 to the central position of the second agitation magnetic field 58 in the second track 55 along the second track 55. A second width $W_2$ is formed on each of the first and second agitation magnetic fields 57, 58 along the second track 55. $P_1 > 0$, $P_2 > 0$, $P1 \neq P_2$, $W_1 > 0$, $W_2 > 0$, $NP_1 = MP_2$. The relationship between the first pitch $P_1$, the first width $W_1$, the second pitch $P_2$ and the second width $W_2$ meets the following formulas:

$$1 < N < \frac{W_1 + W_2}{2 \mid (P_1 - P_2) \mid}$$

wherein:

N is the total number of the first and second agitation magnetic fields 57, 58, N being a positive integer; and

$$1 < M < \frac{W_1 + W_2}{2 \mid (P_1 - P_2) \mid} \times \frac{P_2}{P_1}$$

wherein:

M is the total number of the first and second magnetic force tunnels 41, 42.

It is not for certain that the first and second magnetic force tunnels 41, 42 always communicate with the first and second agitation magnetic fields 57, 58 in the instant of reacting. Other alternatives can be also adopted in the present invention without limitation.

In the above quantum reaction device, the direction of the guide magnetic field 43 is reverse to the direction of the check magnetic field 44.

The first stationary passage 37 of each stationary passage set 36 has a first inlet end 37a and a first outlet end 37b. The second stationary passage 38 of each stationary passage set 36 has a second inlet end 38a and a second outlet end 38b. The first inlet end 37a of the first stationary passage 37 and the second outlet end 38b of the second stationary passage 38 are connected to one of the first and second reaction spaces 33, 34. The first outlet end 37b of the first stationary passage 37 and the second inlet end 38a of the second stationary passage 38 are connected to the other of the first and second reaction spaces 33, 34.

Each guide magnetic field 43 surrounds the first inlet end 37a of the first stationary passage 37 and the second outlet end 38b of the second stationary passage 38 and is connected to one of the first and second reaction spaces 33, 34. Each check magnetic field 44 surrounds the first outlet end 37b of the first stationary passage 37 and the second inlet end 38a of the second stationary passage 38 and is connected to the other of the first and second reaction spaces 33, 34.

The guide magnetic field 43 includes an even number of magnetic poles with different polarities. The magnetic poles are arranged around the first inlet end 37a of the first stationary passage 37 and the second inlet end 38a of the second stationary passage 38 for guiding the reaction fluid 80 to flow therebetween.

The quantum reaction device 30 further includes a movable member 50, which is movable relative to one of the reaction spaces 33, 34.

The agitation magnetic field set 56 is built on the movable member 50 for agitating the reaction fluid 80. The first and second agitation magnetic fields 57, 58 of each agitation magnetic field set 56 respectively have first and second magnetic poles 59, 60 with different polarities. The first and second magnetic poles 59, 60 have unequal intensity of magnetic field.

The movable member 50 further has movement passage sets 52. Each movement passage set 52 includes a first movement passage 53 and a second movement passage 54. The first agitation magnetic field 57 is annularly disposed on inner edge of the first movement passage 53. The second agitation magnetic field 58 is annularly disposed on inner edge of the second movement passage 53. The movable member 50 is rotatable around a central line 32.

The first and second stationary passages 37, 38 of the stationary passage set 36 are alternately distributed at equal angular intervals along a first circular track centered at the central line 32.

The agitation magnetic field set 56 is distributed at equal angular intervals along a second circular track centered at the central line 32 and revolves along the second circular track. The second circular track of the agitation magnetic field set 56 corresponds to the first circular track, whereby during the revolution, the agitation magnetic field set 56 always sequentially corresponds to the stationary passage set 36.

The number of the guide magnetic fields 43 and the number of the check magnetic fields 44 are both 5. In other words, there are totally ten first and second magnetic force tunnels 41, 42 composed of the guide magnetic fields 43 and the check magnetic fields 44. The number of the agitation magnetic field sets 56 is 6. In other words, there are totally twelve first and second agitation magnetic fields 57, 58. Such arrangement makes the magnetic force tunnel set 40 composed of the first and second magnetic force tunnels 41, 42 and the agitation magnetic field set 56 composed of the first and second agitation magnetic fields 57, 58 have better reaction efficiency.

The quantum reaction device 30 of the present invention further includes a rotation control device 61. The rotation control device 61 includes a first magnetic field set 62, a second magnetic field set 64 and a power supply circuit 66.

The first magnetic field set 62 includes multiple first magnetic field units 63 arranged along the rotational track of the movable member 50 at equal angular intervals. In this embodiment, the first magnetic field units 63 are permanent magnets arranged on inner edge of the movable member 50 at equal angular intervals.

The second magnetic field set 64 includes multiple second magnetic field units 65 disposed in the reaction container 31 and arranged at equal angular intervals corresponding to the rotational track of the movable member 50 for magnetizing the first magnetic field set 62 to make the movable member 50 rotate around the central line 32. In this embodiment, the second magnetic field units 65 are electromagnetic coils arranged in the dents 49 of outer circumference of the main housing 45 at equal angular intervals.

The power supply circuit 66 serves to supply power to the second magnetic field set 64 for the second magnetic field set 64 to create magnetic field for magnetizing the first magnetic field set 62 so as to make the movable member 50 rotate around the central line 32.

The quantum reaction device 30 of the present invention further includes an energy conversion device 67 including a third magnetic field set 68, a fourth magnetic field set 70 and a fifth magnetic field set 72.

The third magnetic field set 68 includes multiple third magnetic field units 69 disposed in the reaction container 31 and arranged at equal angular intervals corresponding to the rotational track of the movable member 50.

The fourth magnetic field set 70 includes multiple fourth magnetic field units 71 arranged on the movable member 50 at equal angular intervals corresponding to the rotational track of the movable member 50. The fourth magnetic field set 70 serves to magnetize the third magnetic field set 68 for the third magnetic field set 68 to generate induced current.

The energy conversion device 67 further includes a magnetic conduction member 74 coupled to the movable member 50 by means of a shaft coupling sleeve 75 and synchronously rotatable with the movable member 50 under support of the rotary shaft 76. The fifth magnetic field set 72 includes multiple fifth magnetic field units 73 arranged on the magnetic conduction member 74 at equal angular intervals corresponding to the rotational track of the movable member 50 and synchronously rotatable with the fourth magnetic field set 70. The fourth and fifth magnetic field sets 70, 72 together magnetize the third magnetic field set 68 for the third magnetic field set 68 to generate induced current.

In the quantum reaction method of the present invention, at least one first reaction space and at least one second reaction space are provided and at least one magnetic force tunnel set including first and second magnetic force tunnels is built between the first and second reaction spaces. At least one agitation magnetic field set including first and second agitation magnetic fields is built in at least one of the first and second reaction spaces. A reaction fluid approximately at the pressure and temperature of liquid-gas interface (boiling point curve) is filled in the first and second reaction spaces. The agitation magnetic field set is turned on to agitate the reaction fluid. Accordingly, the magnetic force tunnel set guides the reaction fluid to back and forth flow between the first and second reaction spaces to alternately react.

In the quantum reaction method and the quantum reaction device of the present invention, the reaction fluid contains, but not limited to, carbon element, for example, carbon dioxide and carbon isotope.

The above embodiments are only used to illustrate the present invention, not intended to limit the scope thereof. Many modifications of the above embodiments can be made without departing from the spirit of the present invention.

**Claims**

1. A quantum reaction method comprising steps of:

   (a) providing at least one first reaction space and at least one second reaction space;
   (b) defining a first track between the first and second reaction spaces and defining a second track in at least one of the first and second reaction space corresponding to the first track;
   (c) building at least one magnetic force tunnel set between the first and second reaction spaces, each magnetic force tunnel set including first magnetic force tunnels and second magnetic force tunnels, the first and second magnetic force tunnels being alternately arranged along the first track at equal intervals, each of the first and second magnetic force tunnels including guide magnetic field and check magnetic field, the guide magnetic field of the first magnetic force tunnel and the check magnetic field of the second magnetic force tunnel being connected to one of the first and second reaction spaces, the check magnetic field of the first magnetic force tunnel and the conduction magnetic field of the second magnetic force tunnel being connected to the other of the first and second reaction spaces;
   (d) building at least one agitation magnetic field set in at least one of the first and second reaction spaces, each agitation magnetic field set including first agitation magnetic field and second agitation magnetic field, the direction of the first agitation magnetic field being reverse to the direction of the agitation magnetic field, the first and second agitation magnetic fields being alternately arranged along the second track at equal intervals;
   (e) filling into the first and second reaction spaces a reaction fluid approximately at the pressure and temperature of liquid-gas interface (boiling point curve); and
   (f) turning on the first and second agitation magnetic fields of the agitation magnetic field set to respectively agitate the reaction fluid along the second track, the guide magnetic fields of the first and second magnetic force tunnels guiding the reaction fluid to pass through the guide magnetic fields and then pass through the check magnetic fields of the first and second magnetic force tunnels, the checking magnetic fields providing checking effect for the reaction fluid to make the reaction fluid flow from one of the first and second reaction spaces into the other of the first and second reaction spaces, whereby the reaction fluid alternately flows between the first and second reaction spaces to react.

2. The quantum reaction method as claimed in claim 1, wherein the reaction fluid contains carbon element.

3. The quantum reaction method as claimed in claim 1, wherein the direction of the guide magnetic field is reverse to the direction of the check magnetic field.

4. The quantum reaction method as claimed in claim 1, wherein the guide magnetic field includes an even number of magnetic poles with different polarities, the magnetic poles being arranged around one end of the first magnetic force tunnel and one end of the second magnetic force tunnel for guiding the reaction fluid to flow therebetween.

5. The quantum reaction method as claimed in claim 1, wherein at least one movable member is further disposed in one of the first and second reaction spaces, the movable member being movable along the second track relative to one of the reaction spaces, the agitation magnetic field set being built on the movable member for agitating the reaction fluid.

6. The quantum reaction method as claimed in claim 1, wherein the first and second agitation magnetic fields of each agitation magnetic field set respectively have first and second magnetic poles with different polarities.

7. The quantum reaction method as claimed in claim 6, wherein the first and second magnetic poles have unequal intensity of magnetic field.

8. The quantum reaction method as claimed in claim 5, wherein the first and second agitation magnetic fields of each agitation magnetic field set respectively have first and second magnetic poles with different polarities.

9. The quantum reaction method as claimed in claim 8, wherein the first and second magnetic poles have unequal intensity of magnetic field.

10. The quantum reaction method as claimed in claim 8 or 9, wherein the movable member further has movement passage sets, each movement passage set including a first movement passage and a second movement passage, the first agitation magnetic field being annularly disposed on inner edge of the first movement passage, the second agitation magnetic field being annularly disposed on inner edge of the second movement passage, the first and second movement passages being arranged along the second track.

11. The quantum reaction method as claimed in claim 1, wherein the reaction of the reaction fluid is converted into mechanical energy.

12. The quantum reaction method as claimed in claim 11, wherein the mechanical energy is further converted into electric energy by means of electromagnetic induction.

13. The quantum reaction method as claimed in claim 5, wherein the reaction fluid reacts to do work on the movable member so as to convert the reaction of the reaction fluid into mechanical energy.

14. The quantum reaction method as claimed in claim 5, wherein in the beginning of the reaction, electromagnetic energy is applied to the movable member so as to make the movable member start moving from a stationary state.

15. The quantum reaction method as claimed in claim 5, wherein the first and second reaction spaces further have a central line, the first and second stationary passages of the stationary passage set being alternately distributed at equal angular intervals along a first circular track centered at the central line.

16. The quantum reaction method as claimed in claim 15, wherein the movable member is rotatable around the central line.

17. The quantum reaction method as claimed in claim 16, wherein the first and second agitation magnetic fields of the agitation magnetic field set are alternately distributed at equal angular intervals along a second circular track centered at the central line and revolve along the second circular track, the second circular track of the agitation magnetic field set corresponding to the first circular track of the stationary passage set, whereby during the revolution, the agitation magnetic field set always sequentially passes through the stationary passage set.

18. The quantum reaction method as claimed in claim 17, wherein there are totally ten first and second magnetic force tunnels.

19. The quantum reaction method as claimed in claim 18, wherein there are totally twelve first and second agitation magnetic fields.

20. A quantum reaction device comprising:

(a) a reaction container at least having a first reaction space and a second reaction space in communication with the first reaction space, a first track being defined between the first and second reaction spaces, a second track being defined in at least one of the first and second reaction space corresponding to the first track, a reaction fluid approximately at the pressure and temperature of liquid-gas interface (boiling point curve) being filled in the first and second reaction spaces;

(b) at least one stationary passage set disposed between the first and second reaction spaces, each stationary passage set including first stationary passages and second stationary passages, the first and second stationary passages being alternately arranged at equal intervals along the first track;

(c) at least one magnetic force tunnel set disposed at each stationary passage set, each magnetic force tunnel set including first magnetic force tunnels and second magnetic force tunnels, the first magnetic force tunnels being disposed at the first stationary passages, while the second magnetic force tunnels being disposed at the second stationary passages, each of the first and second magnetic force tunnels including guide magnetic field and check magnetic field, the guide magnetic field of the first magnetic force tunnel and the check magnetic field of the second magnetic force tunnel being connected to one of the first and second reaction spaces, the check magnetic field of the first magnetic force tunnel and the conduction magnetic field of the second magnetic force tunnel being connected to the other of the first and second reaction spaces; and

(d) at least one movable agitation magnetic field set, each agitation magnetic field set including first agitation magnetic field and second agitation magnetic field, the direction of the first agitation magnetic field being reverse to the direction of the agitation magnetic field, the first and second agitation magnetic fields being alternately arranged at equal intervals along the second track to agitate the reaction fluid, when the reaction fluid sequentially passes through the first and second stationary passages, the guide magnetic fields of the passages providing guiding effect for the reaction fluid and the check magnetic fields of the passages providing checking effect for the reaction fluid, whereby the reaction fluid alternately flows between the first and second reaction spaces to react.

21. The quantum reaction device as claimed in claim 20, wherein the reaction fluid contains carbon element.

22. The quantum reaction device as claimed in claim 20, wherein the direction of the guide magnetic field is reverse to the direction of the check magnetic field.

23. The quantum reaction device as claimed in claim 20, wherein the first stationary passage of each stationary passage set has a first inlet end and a first outlet end and the second stationary passage of each stationary passage set has a second inlet end and a second outlet end, the first inlet end of the first stationary passage and the second outlet end of the second stationary passage being connected to one of the first and second reaction spaces, the first outlet end of the first stationary passage and the second inlet end of the second stationary passage being connected to the other of the first and second reaction spaces.

24. The quantum reaction device as claimed in claim 20, wherein each guide magnetic field surrounds the first inlet end of the first stationary passage and the second outlet end of the second stationary passage and is connected to one of the first and second reaction spaces, each check magnetic field surrounding the first outlet end of the first stationary passage and the second inlet end of the second stationary passage and being connected to the other of the first and second reaction spaces.

25. The quantum reaction device as claimed in claim 20, wherein the guide magnetic field includes an even number of magnetic poles with different polarities, the magnetic poles being arranged around the first inlet end of the first stationary passage and the second inlet end of the second stationary passage for guiding the reaction fluid to flow therebetween.

26. The quantum reaction device as claimed in claim 20, further comprising a movable member, the movable member being movable relative to one of the reaction spaces.

27. The quantum reaction device as claimed in claim 26, wherein the agitation magnetic field set is built on the movable member for agitating the reaction fluid.

28. The quantum reaction device as claimed in claim 20, wherein the first and second agitation magnetic fields of each agitation magnetic field set respectively have first and second magnetic poles with different polarities.

29. The quantum reaction device as claimed in claim 28, wherein the first and second magnetic poles have unequal intensity of magnetic field.

30. The quantum reaction device as claimed in claim 26, wherein the first and second agitation magnetic fields of each agitation magnetic field set respectively have first and second magnetic poles with different polarities.

31. The quantum reaction device as claimed in claim 30, wherein the first and second magnetic poles have unequal intensity of magnetic field.

32. The quantum reaction device as claimed in claim 30 or 31, wherein the movable member further has movement passage sets, each movement passage set including a first movement passage and a second movement passage, the first agitation magnetic field being annularly disposed on inner edge of the first movement passage, the second agitation magnetic field being annularly disposed on inner edge of the second movement passage.

33. The quantum reaction device as claimed in claim 26, wherein the movable member is rotatable around a central line.

34. The quantum reaction device as claimed in claim 33, wherein the first and second stationary passages of the stationary passage set are alternately distributed at equal angular intervals along a first circular track centered at the central line.

35. The quantum reaction device as claimed in claim 34, wherein the agitation magnetic field set is distributed at equal angular intervals along a second circular track centered at the central line and revolves along the second circular track, the second circular track of the agitation magnetic field set corresponding to the first circular track, whereby during the revolution, the agitation magnetic field set always sequentially corresponds to the stationary passage set.

36. The quantum reaction device as claimed in claim 35, wherein there are totally ten first and second magnetic force tunnels.

37. The quantum reaction device as claimed in claim 36, wherein there are totally twelve first and second agitation magnetic fields.

38. The quantum reaction device as claimed in claim 33, further comprising a rotation control device, the rotation control device including:

(a) a first magnetic field set including multiple first magnetic field units arranged along the rotational track of the movable member at equal angular intervals;
(b) a second magnetic field set including multiple second magnetic field units disposed in the reaction container and arranged at equal angular intervals corresponding to the rotational track of the movable member for magnetizing the first magnetic field set to make the movable member rotate around the central line; and
(c) a power supply circuit serving to supply power to the second magnetic field set for the second magnetic field set to create magnetic field for magnetizing the first magnetic field set so as to make the movable member rotate around the central line.

39. The quantum reaction device as claimed in claim 33, further comprising an energy conversion device, the energy conversion device including:

(a) a third magnetic field set including multiple third magnetic field units disposed in the reaction container and arranged at equal angular intervals corresponding to the rotational track of the movable member; and
(b) a fourth magnetic field set including multiple fourth magnetic field units arranged on the movable member at equal angular intervals corresponding to the rotational track of the movable member, the fourth magnetic field set serving to magnetize the third magnetic field set for the third magnetic field set to generate induced current.

40. The quantum reaction device as claimed in claim 39, wherein the energy conversion device further includes a magnetic conduction member synchronously rotatable with the movable member and a fifth magnetic field set including multiple fifth magnetic field units, the fifth magnetic field units being arranged on the magnetic conduction member at equal angular intervals corresponding to the rotational track of the movable member and synchronously rotatable with the fourth magnetic field set, whereby the fourth and fifth magnetic field sets together magnetize the third magnetic field set for the third magnetic field set to generate induced current.

41. A quantum reaction method comprising steps of:

(a) providing at least one first reaction space and at least one second reaction space;
(b) building at least one magnetic force tunnel set between the first and second reaction spaces, the magnetic force tunnel set including first and second magnetic force tunnels;

(c) building at least one agitation magnetic field set in at least one of the first and second reaction spaces, the agitation magnetic field set including first and second agitation magnetic fields;

(d) filling into the first and second reaction spaces a reaction fluid approximately at the pressure and temperature of liquid-gas interface (boiling point curve); and

(e) turning on the agitation magnetic field set to agitate the reaction fluid, whereby the magnetic force tunnel set guides the reaction fluid to back and forth flow between the first and second reaction spaces to alternately react.

A1

A2

A3

A4

B

C

FIG. 1

FIG. 2

EP 2 434 633 A1

FIG. 3

FIG. 4

FIG. 5

FIG. 6

FIG. 7

FIG. 8

EP 2 434 633 A1

FIG. 9

EP 2 434 633 A1

FIG. 10

FIG. 11

**FIG. 12**

| Europäisches Patentamt European Patent Office Office européen des brevets | **DECLARATION**<br><br>which under Rule 63 of the European Patent Convention shall be considered, for the purposes of subsequent proceedings, as the European search report | Application Number<br><br>EP 11 18 1853 |

| The Search Division considers that the present application, does not comply with the provisions of the EPC to such an extent that it is not possible to carry out a meaningful search into the state of the art on the basis of all claims<br><br>Reason: | CLASSIFICATION OF THE APPLICATION (IPC)<br><br>INV.<br>H02N11/00 |
|---|---|

1           The application does not fulfil the requirements of Article 83 EPC, since it does not disclose the alleged invention in a manner sufficiently clear and complete for it to be carried out by a person skilled in the art.

2           It is the objective of the invention to provide a new energy source (see description, p. 2, l. 20-23). In all embodiments of the description it appears that once the movable member 50 has been set into rotation at start (see p. 19, l. 2-5) no energy from the outside is transferred to the quantum reaction device, although the device produces mechanical energy (see p. 18, l. 19-21) and then electrical energy (see p. 18, l. 22-24).
This clearly contravenes the general accepted law of energy conservation (first law of thermodynamics).

3           More specifically the description of the application does not disclose how magnetic fields of the "magnetic force tunnels" alone (see description, p. 17, l. 24-28) may lead to a reaction fluid circulation within the device.

4           The objection raised above is such that there appears to be no possibility to perform a meaningful search of the claims.

The applicant's attention is drawn to the fact that a search may be carried out during examination following a declaration of no search under Rule 63 EPC, should the problems which led to the declaration being issued be overcome (see EPC Guideline C-VI, 8.2).

| Place of search<br><br>Berlin | Date<br><br>17 January 2012 | Examiner<br><br>Roy, Christophe |
|---|---|---|

EPO FORM 1504 (P04F37)